# EUROPÄISCHE PATENTANMELDUNG

(11) **EP 1 281 551 A2**
(43) Veröffentlichungstag der Anmeldung: **05.02.2003**
(21) Anmeldenummer: 02012670.2
(22) Anmeldetag: 07.06.2002
(51) Int. Cl.: B60J 7/14

(54) **Kraftwagen mit zu öffnendem Festdach**

(30) Priorität: 30.07.2001 DE 10137023
(71) Anmelder: DaimlerChrysler AG, 70567 Stuttgart (DE)
(72) Erfinder: Bässler, Thomas, 71088 Holzgerlingen (DE); Bauer, Ulrich, 71134 Aidlingen (DE); Koch, Michael, 71065 Sindelfingen (DE); Orth, Stefan, 75383 Althengstett (DE); Schrader, Jürgen, 71093 Weil im Schönbuch (DE)

(57) **Zusammenfassung**

Die Erfindung betrifft einen Kraftwagen mit zu öffnendem Festdach mit einem Front- und einem Heckdachteil, die gelenkig miteinander verbunden und unter Steuerung durch eine Hauptlenkeranordnung zwischen einer Schließ- und einer Ablagestellung in einem Heckstauraum verlagerbar sind,
mit einer an seitlichen Dachsäulen schwenkbar gelagerten festen Heckscheibe, deren Schwenkachse im Mittelbereich der Heckscheibe in Fahrzeugquerrichtung verläuft, wobei die Heckscheibe während der Öffnungs- und Schließbewegung des Festdaches relativ zu den Dachsäulen drehangetrieben ist, und wobei die Heckscheibe nach Erreichen der Schließstellung des Festdaches über den Drehantrieb gegen einen mit der Heckscheibe zusammenwirkenden Dichtsitz gedrückt ist.

Es ist eine Stützanordnung vorgesehen, die mindestens ein Stützelement umfasst, durch dessen Vorschub die Heckscheibe mit einer den Dichtsitz der Heckscheibe sicherstellenden Drehkraft beaufschlagbar ist.

## Beschreibung

Die Erfindung betrifft einen Kraftwagen mit zu öffnendem Festdach nach dem Oberbegriff des Patentanspruchs 1.

Der DE 197 51 660 C1 ist bereits ein solcher Kraftwagen mit zu öffnendem Festdach als bekannt zu entnehmen, welches einen Front- und einen Heckdachteil umfasst. Die beiden Dachteile sind gelenkig miteinander verbunden und unter Steuerung durch eine Hauptlenkeranordnung zwischen einer Schließ- und einer Ablagestellung in einem Heckstauraum verlagerbar. Das Heckdachteil umfasst eine an seitlichen Dachsäulen schwenkbar gelagerte feste Heckscheibe, deren Schwenkachse im Mittelbereich der Heckscheibe in Fahrzeugquerrichtung verläuft. Um die Heckscheibe mit ihrer Wölbung gleichsinnig zum Frontdachteil platzsparend im Heckstauraum abzulegen, ist diese während der Öffnungsund Schließbewegung des Festdaches relativ zu den Dachsäulen drehangetrieben. Als Drehantrieb dient dabei eine mit der Hauptlenkeranordnung gekoppelte weitere Hebelanordnung. Nach dem Schließen des Festdaches wird die Heckscheibe mittels des Drehantriebs gegen einen mit dieser zusammenwirkenden Dichtsitz gedrückt. Um dabei eine ausreichend Abdichtung der Heckscheibe gegen den Dichtsitz zu erreichen, ist eine erhebliche Kraft des Drehantriebes erforderlich.

Der Erfindung liegt daher die Aufgabe zugrunde, einen Kraftwagen der eingangs genannten Art zu schaffen, bei dem die Abdichtung der Heckscheibe gegen den Dichtsitz auf vereinfachte und zuverlässigere Weise erreicht wird.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung ist eine Stützanordnung mit mindestens einem Stützelement vorgesehen, durch dessen Vorschub die drehbare Heckscheibe mit einer weiteren Drehkraft beaufschlagbar ist, durch die der Dichtsitz der Heckscheibe sichergestellt ist. Mit anderen Worten wird durch die Stützanordnung die durch den Drehantrieb bereits gegen die Dichtung gedrückte Heckscheibe um einen geringen Winkelbetrag weitergedreht, um einen verbesserten Dichtsitz zu erreichen. Somit kann auch der Drehantrieb vereinfacht und kleiner dimensioniert werden, da die wesentliche Dichtkraft durch die Stützanordnung aufgebracht werden kann.

Als besonders vorteilhaft hat sich die Verwendung von zwei Stützelementen gezeigt, welche unter spiegelsymmetrischer Anordnung platzsparend und unauffällig für die Insassen mit zugeordneten seitlichen Randzonen der Heckscheibe zusammenwirken.

Besonders einfach ist eine Stützanordnung zu gestalten, welche am zugeordneten Hauptlenker angebracht ist. Dadurch bewegt sich die Stützanordnung beim Schließen des Daches selbsttätig in ihre Stützstellung.

Sind in einem Abstand unterhalb der Schwenkachse Mittel zur Zentrierung der Heckscheibe vorgesehen, so kann einerseits eine gute Positionierung der Heckscheibe und andererseits eine verbesserte Verwindungsaussteifung des Daches im Bereich des Heckdachteiles erreicht werden. Die Verwindungsaussteifung ist besonders gut, wenn unter spiegelsymmetrischer Anordnung an den seitlichen Dachsäulen jeweils ein Zentrierelement angeordnet ist, welches mit einem korrespondierenden Zentrierelemente der Heckscheibe zusammenwirkt.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine schematische Schnittansicht auf das geschlossene Festdach entlang der Mittenlängsebene des erfindungsgemäßen Kraftwagens mit dem gelenkig miteinander verbundenen Front- und Heckdachteil sowie der Hauptlenkeranordnung zum Öffnen des Daches;
- Fig.2 und 3: jeweils eine schematische Schnittansicht auf das Festdach während einer ersten und zweiten Stufe des Ablegevorgangs des Dachs in einem Heckstauraum;
- Fig.4: eine schematische Schnittansicht auf das Festdach in abgelegtem Zustand;
- Fig.5: eine schematische ausschnittweise Perspektivansicht von rechts vorne in Richtung nach hinten oben auf den Heckdachteil und einen der Hauptlenker in geschlossenem Zustand des Dachs;
- Fig.6: eine vergrößerte ausschnittweise Perspektivansicht auf den in Fig.5 gezeigten Heckdachteil und den Hauptlenker im Bereich der Dachsäule;
- Fig.7: einen schematischen Querschnitt entlang der Linie VII-VII in Fig.6 durch den Heckdachteil im Bereich der Dachsäule; und in
- Fig.8: einen schematischen Querschnitt entlang der Linie VIII-VIII in Fig.6 durch den Heckdachteil im Bereich der Dachsäule.

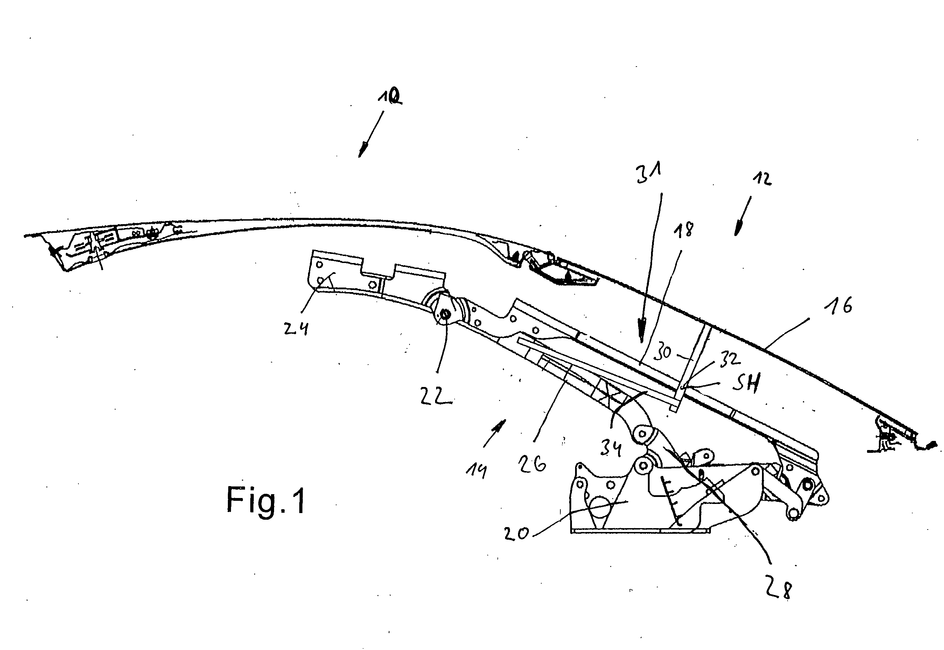

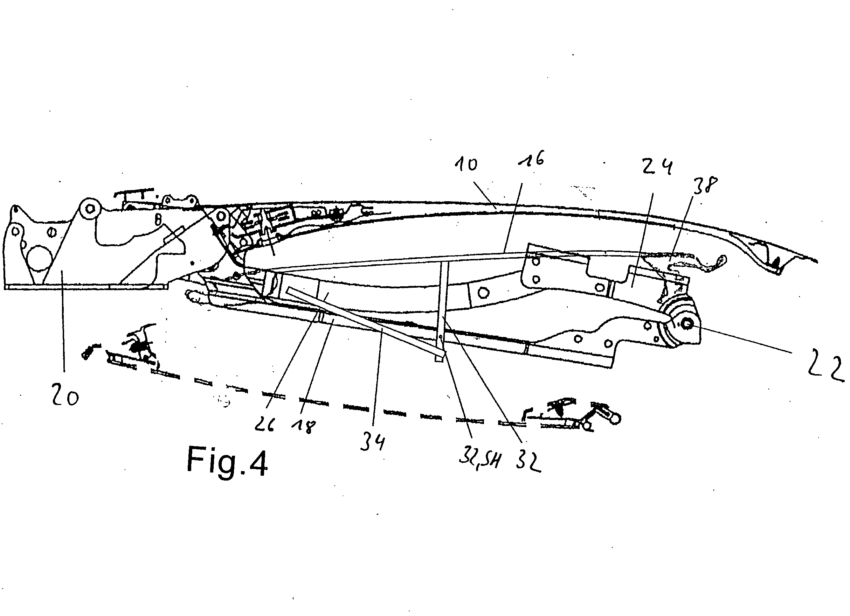

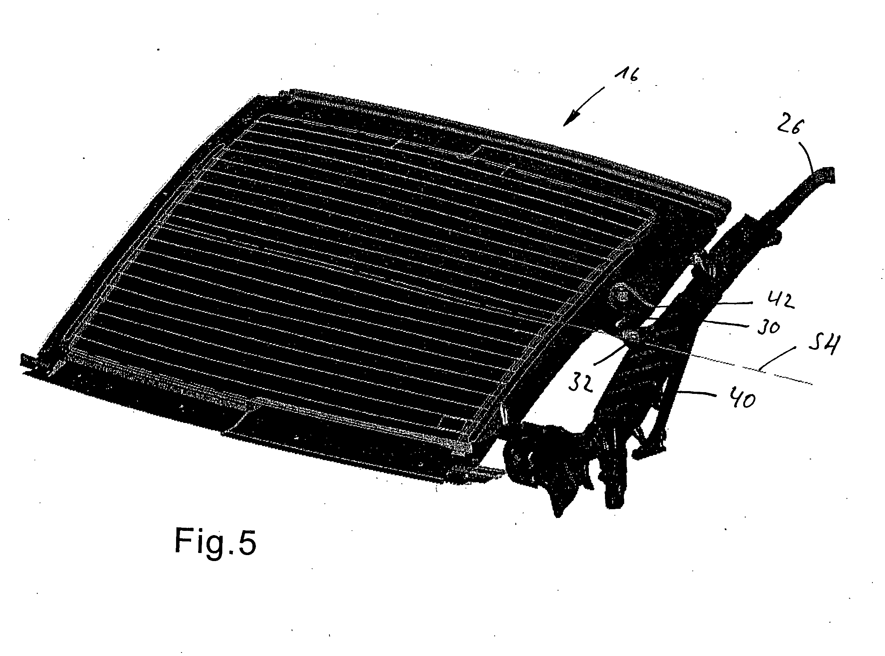

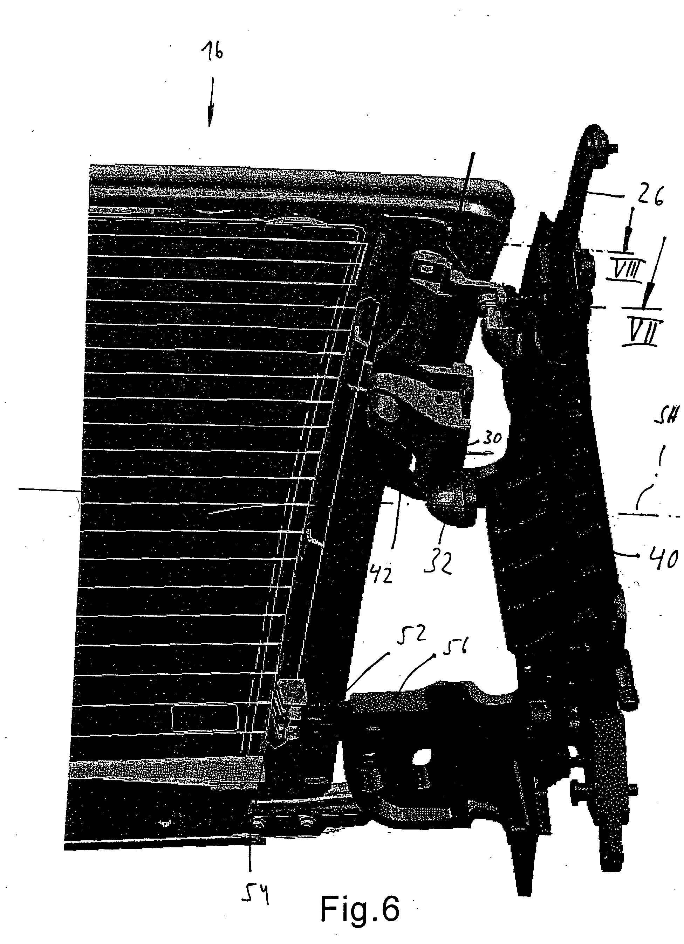

In Fig.1 ist in schematische Schnittansicht entlang der Mittenlängsebene das zu öffnende Festdach eines Kraftwagens in geschlossenem Zustand dargestellt. Das Festdach umfasst ein gelenkig miteinander verbundenes Front- und Heckdachteil 10,12, wobei sich das Frontdachteil 10 vorderseitig an einen nicht gezeigten Windschutzscheibenrahmen anschließt und das Heckdachteil 12 rückseitig auf Höhe der Bordwand des Kraftwagens endet. Das Front- und Heckdachteil 10,12, sind unter Steuerung durch eine im weiteren noch näher erläuterte Hauptlenkeranordnung 14 zwischen der hier gezeigten Schließ- und einer in Fig. 4 gezeigten Ablagestellung in einem Heckstauraum verlagerbar. Das Heckdachteil 12 umfasst als wesentliche Teile eine feste Heckscheibe 16 aus Glas oder Kunststoff und seitliche C-Säulen 18, wobei die Heckscheibe 16 um eine in deren Mittelbereich in Fahrzeugquerrichtung verlaufende Schwenkachse SH auf im weiteren noch beschriebene Weise an den seitlichen Dachsäulen 16 schwenkbar gelagert ist. Am hinteren Ende sind die seitlichen C-Säulen jeweils gelenkig an einem Hauptlager 20 angebunden, während sie an ihren vorderen Enden jeweils einen Hauptdrehpunkt 22 aufweisen, an dem auch ein Scharnier 24 für das Frontdachteil 10 angelenkt ist. An dem von dem Hauptdrehpunkt 22 abgewandten Ende des Scharniers 24 ist ein in Fig. 1 verdecktes Ende eines Hauptlenkers 26 der Hauptlenkeranordnung 14 angelenkt, dessen anderes Ende über einen Zwischenhebel 28 mit dem Hauptlager 20 verbunden ist. Die beiden Hauptlenker 26 verlaufen seitlich nahe der C- Säulen. Die Heckscheibe 16 ist über im Zusammenhang mit den Figuren 5 und 6 noch näher erläuterte Weise fest mit einem Hebel 30 eines Drehantriebs 31 starr verbunden, der im mittleren Bereich der Heckscheibe 16 in Richtung nach innen absteht und über einen Drehpunkt 32 jeweils gelenkig mit der C-Säule 18 schwenkbar verbunden ist. Der Hebel 30 ist an seinem dem Drehpunkt 32 zugewandten Ende fest mit einem Zwangsführungshebel 34 verbunden, der wiederum mit seinem von dem Hebel 30 abgewandten Ende an den dazugehörigen Hauptlenker 26 angelenkt ist.

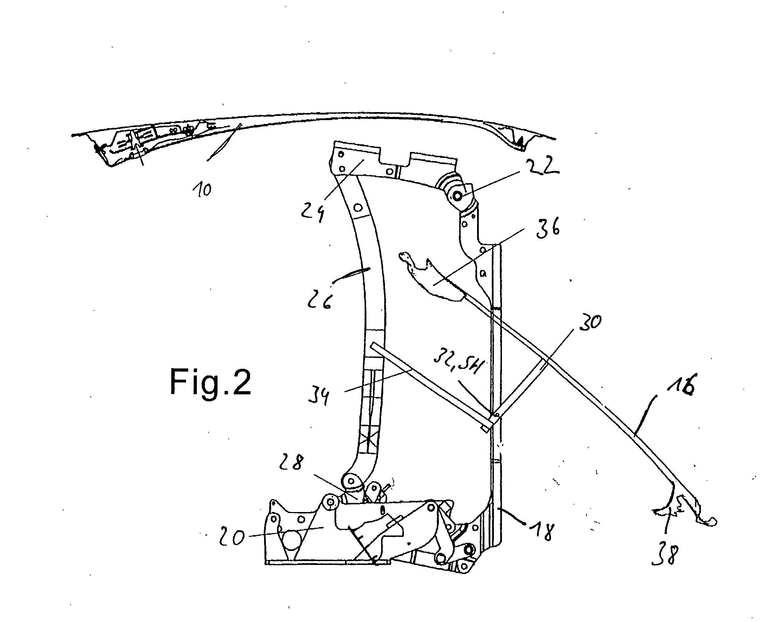

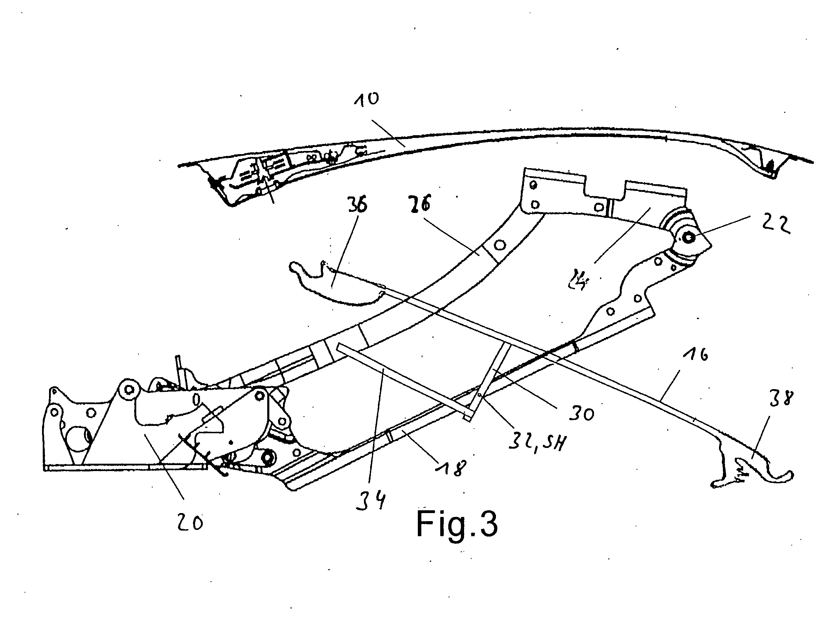

Aus den Fig. 2 bis 4 sind jeweils in schematischer Schnittansicht drei Stufen des Ablegvorgangs des Dachs in einen nicht gezeigten Heckstauraum ersichtlich. Mit Antrieb des Hauptlenkers 26 über den Zwischenhebel 28 von einer nicht näher dargestellten Antriebseinrichtung aus wird über die Zwangsführungshebel 34 und die Hebel 32 des Drehantriebs 31 gleichzeitig auch zwangsgeführt die Heckscheibe 16 bewegt. Aufgrund der vorstehend beschriebenen Anordnung der Hebel und Gelenkpunkte wird die Heckscheibe 16 mittels des Drehantriebs 31 separat von den C-Säulen 18 abgelegt, wobei die Ablegbewegung dabei zwangsgeführt so erfolgt, dass die Heckscheibe 16 keine Drehbewegung nach hinten, sondern lediglich eine Schwenkbewegung um die in Fahrzeugquerrichtung verlaufende Schwenkachse SH im Mittelbereich der Heckscheibe 16 nach unten und hinten durchführt, wobei die Heckscheibe 16 grundsätzlich ihre Lagerichtung beibehält. Mit anderen Worten: eine vordere bzw. obere Dichtung 36 verbleibt vorne und eine hintere Dichtung 38 verbleibt hinten.

Wie aus der Fig. 4 ersichtlich ist, liegen damit in abgelegtem Zustand das Frontdachteil 10 und die Heckscheibe 16 raumsparend in gleichem Sinne gekrümmt bzw. mit der gleichen Wölbung im Heckbereich des Fahrzeuges. In Fig. 4 ist teilweise gestrichelt zusätzlich eine Heckscheibe in einer Lage eingezeichnet, die sie bei einer Bewegung nach Stand der Technik hätte.

Fig.5 zeigt in schematischer ausschnittweiser Perspektivansicht von rechts vorne in Richtung nach hinten oben den Heckdachteil 12 mit der Heckscheibe 16, einer Tragstruktur 40 der Dachsäule 18 und einem der beiden Hauptlenker 26 in geschlossenem Zustand des Dachs. Dabei ist die sich im Mittelbereich der Heckscheibe in Fahrzeugquerrichtung erstreckende Schwenkachse SH der Heckscheibe 16 sowie der an dem Drehpunkt 32 an der Tragstruktur 40 der Dachsäule 18 angelagerte Hebel 30 erkennbar, welcher seinerseits über eine Konsole 42 fest mit der Heckscheibe 16 verbunden ist. Der Zwangsführungshebel 34, über welchen der Hebel 30 zum Drehantrieb der Heckscheibe 16 mit dem Hauptlenker 26 gekoppelt ist, ist in Fig.5 nicht erkennbar. Die hintere rechte Anbindung der Heckscheibe 16 ist unter spiegelsymmetrischer Anordnung entsprechend der ersichtlichen linken Anordnung ausgebildet und deshalb nicht gezeigt.

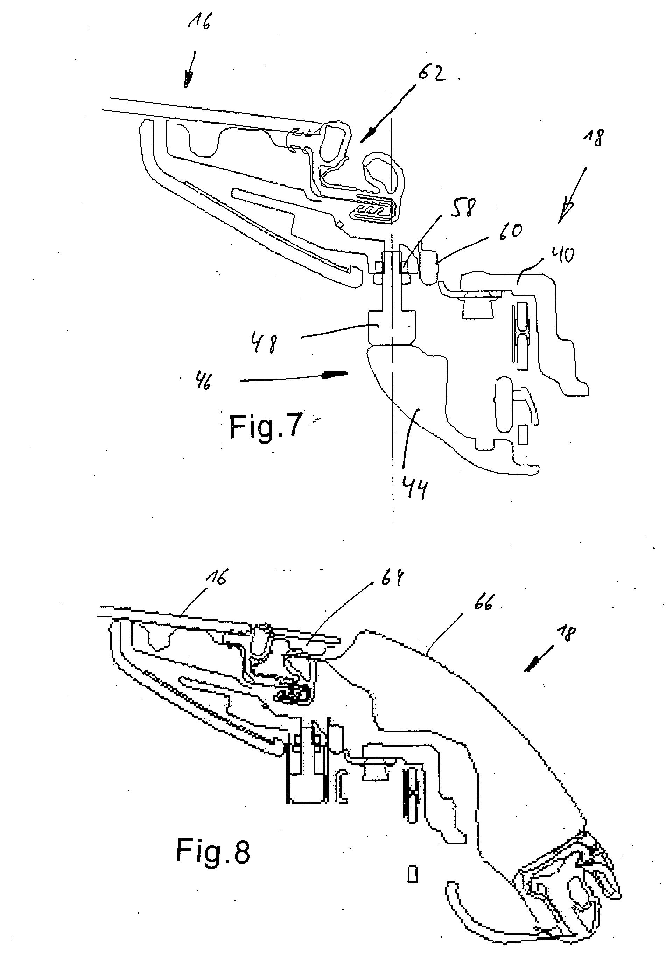

In Zusammenschau mit Fig.6, welche eine vergrößerte ausschnittweise Perspektivansicht auf den in Fig.5 dargestellten Bereich des Heckdachteils 12 zeigt, ist oberhalb der Schwenkachse SH ein Stützelement 44 einer Stützanordnung 46 am zugeordneten Hauptlenker 26 fest angebracht, welches beim Schließen des Festdaches selbsttätig in seine Stützstellung bewegt wird. Dem lenkerseitigen Stützelement 44 ist ein in Fig.7 erkennbare scheibenseitiges Stützelement 48 zugeordnet, welches im weiteren noch beschrieben werden wird. Durch den selbsttätigen Vorschub des Stützelements 44 in seine Stützstellung beim Schließen des Dachs wird die Heckscheibe 16 mit einer deren Dichtsitz sicherstellenden Drehkraft beaufschlagt und die durch den Drehantrieb 31 bereits gegen die Dichtung gedrückte Heckscheibe 16 um einen geringen Winkelbetrag weitergedreht. Um auf beiden Hochseiten der Heckscheibe 16 eine gleichermaßen gute Abdichtung zu erreichen, sind die Stützelemente 44,48, welche mit den zugeordneten seitlichen Randzonen der Heckscheibe 16 zusammenwirken, unter spiegelsymmetrischer Anordnung auf beiden Seiten des Dachs an den zugeordneten Hauptlenkern 26 befestigt.

In einem Abstand unterhalb der Schwenkachse SH sind Mittel 50 zur Zentrierung der Heckscheibe 16 unter spiegelsymmetrischer Anordnung auf beiden Seiten an den seitlichen Dachsäulen 18 vorgesehen. Diese Mittel 50 umfassen jeweils ein an der Tragstruktur 40 der Dachsäule 18 befestigtes Zentrierelemente 52, welches mit einem korrespondierenden, an der Heckscheibe 16 befestigten Zentrierelemente 54 zusammenwirkt. Das Zentrierelement 52 ist dabei gegenüber einer dieses tragenden Konsole 56 der Tragstruktur 40 der Dachsäule 18 einstellbar. Durch diese unterhalb der Schwenkachse SH angeordneten Zentrierelemente 52,54 sowie durch die oberhalb der Schwenkachse SH Stützelement 44 48 wird die Heckscheibe 16 in Fahrzeugquerrichtung zwischen die C-Säulen 18 gespannt bzw. jeweils an den vier Punkten gegen die C-Säulen abgestützt. Hierdurch entsteht ein die Verwindungssteifigkeit erhöhender kraftschlüssiger Verbund zwischen der Scheibe 16 und den Dachsäulen 18.

In Fig.7 ist ein schematischer Querschnitt entlang der Linie VII-VII in Fig.6 durch das hauptlenkerseitige Stützelement 44 und dessen scheibenseitiges Stützelement 48 gezeigt. Das scheibenseitige Stützelement 48 ist hier in ein Gewinde 58 eingeschraubt, welches seinerseits fest mit der Heckscheibe 16 verbunden ist. Hierdurch ist die Stützkraft der Stützelemente 44,48 und somit die den Dichtsitz der Scheibe 16 sicherstellende Drehkraft einstellbar. Der oben beschriebene selbsttätige Vorschub des Stützelements 44 in seine Stützstellung beim Schließen des Dachs wird erreicht, indem der das Stützelement 44 tragende Hauptlenker 26 beim Schließen des Daches in seine Ausgangsstellung zurückgefahren wird. Das Stützelement 48 ist seitlich gegen ein an der Tragstruktur 40 der Dachsäule 18 befestigtes Stützmittel 60 abgestützt. Dabei ist das Stützmittel 60 insbesondere in Fahrzeugquerrichtung einstellbar. Von dem Dichtsitz ist ein scheibenseitiges Dichtungsprofil 62 erkennbar, welches bei Beaufschlagung durch die Drehkraft des Drehantriebs bzw. der Stützeinrichtung 46 gegen ein in Fig.8 erkennbares Dichtungsprofil 64 auf Seiten der Dachsäule 18 gedrückt wird. Das Dichtungsprofil 62 ist dabei innenseitig und das Dichtungsprofil 64 ist außenseitig angeordnet.

Fig.8 zeigt einen schematischen Querschnitt entlang der Linie VIII-VIII in Fig.6 durch die ausschnittweise erkennbare Heckscheibe 16 und die Dachsäule 18. Von der Dachsäule 18 ist eine das Dichtungsprofil 64 tragende Säulenverkleidung 66 erkennbar, wobei außenseitig des Dichtungsprofils 64 ein auf die Heckscheibe 16 abgestimmter, fest an der Dachsäule 18 verbleibender Scheibenabschnitt 68 vorgesehen ist. Der Scheibenabschnitt 68 liegt in einer Ebene mit der Heckscheibe 16. Damit die Heckscheibe gegenüber den Dachsäulen 18 verschwenkt werden kann, ist diese oberhalb der Schwenkachse SH breiter ausgebildet als unterhalb derselben und somit leicht T-förmig ausgebildet. Entsprechend hierzu sind die fest an der Dachsäule 18 verbleibenden linken und rechten Scheibenabschnitte 68 etwa L-förmig gestaltet. Im Bereich oberhalb der Schwenkachse ist - wie oben beschrieben - das scheibenseitige Dichtungsprofil 62 innenseitig und das säulenseitige Dichtungsprofil 64 außenseitig angeordnet; im Bereich unterhalb der SchwenkachseSH befindet sich das scheibenseitige Dichtungsprofil 62 außenseitig und das säulenseitige Dichtungsprofil 64 innenseitig.

Natürlich wäre es auch denkbar, die Stützelemente der Stützanordnung separat von den Hauptlenkern anzuordnen und beispielsweise über einen Linearantrieb gegen die Heckscheibe zu drücken. Als Angriffspunkt wäre dabei insbesondere auch ein Mittelbereich der oberen Randzone der Heckscheibe denkbar.

## Patentansprüche

1. Kraftwagen mit zu öffnendem Festdach mit einem Front- und einem Heckdachteil (10,12), die gelenkig miteinander verbunden und unter Steuerung durch eine Hauptlenkeranordnung (14) zwischen einer Schließ- und einer Ablagestellung in einem Heckstauraum verlagerbar sind,
mit einer an seitlichen Dachsäulen (18) schwenkbar gelagerten festen Heckscheibe (16), deren Schwenkachse (SH) im Mittelbereich der Heckscheibe (16) in Fahrzeugquerrichtung verläuft, wobei die Heckscheibe (16) während der Öffnungsund Schließbewegung des Festdaches relativ zu den Dachsäulen (18) drehangetrieben ist, und wobei die Heckscheibe (16) nach Erreichen der Schließstellung des Festdaches über den Drehantrieb (31) gegen einen mit der Heckscheibe (16) zusammenwirkenden Dichtsitz gedrückt ist,
**dadurch gekennzeichnet,**
**dass** eine Stützanordnung (46) vorgesehen ist, die mindestens ein Stützelement (44,48) umfasst, durch dessen Vorschub die Heckscheibe (16) mit einer den Dichtsitz der Heckscheibe (16) sicherstellenden Drehkraft beaufschlagbar ist.

2. Kraftfahrwagen nach Anspruch 1,
**dadurch gekennzeichnet,**
**dass** jedes Stützelement (44,48) der Stützanordnung (46) in einem Abstand oberhalb der Schwenkachse (SH) an der Heckscheibe (16) angreift.

3. Kraftwagen nach Anspruch 2,
**dadurch gekennzeichnet,**
**dass** zwei Stützelemente (44,48) unter spiegelsymmetrischer Anordnung mit zugeordneten seitlichen Randzonen der Heckscheibe (16) zusammenwirken.

4. Kraftfahrzeug nach Anspruch 3,
**dadurch gekennzeichnet,**
**dass** die Stützelemente (44,48) am zugeordneten Hauptlenker (26) angebracht sind und beim Schließen des Festdaches selbsttätig in ihre Stützstellung bewegt sind.

5. Kraftfahrzeug nach Anspruch 4,
**dadurch gekennzeichnet,**
**dass** die Stützelemente (48) einstellbar ausgebildet sind.

6. Kraftfahrzeug nach Anspruch 2,
**dadurch gekennzeichnet,**
**dass** in einem Abstand unterhalb der Schwenkachse (SH) Mittel (50) zur Zentrïerung der Heckscheibe (16) vorgesehen sind.

7. Kraftfahrzeug nach Anspruch 6,
**dadurch gekennzeichnet,**
**dass** unter spiegelsymmetrischer Anordnung an den seitlichen Dachsäulen (18) jeweils ein Zentrierelement (52) angeordnet ist, welches mit einem korrespondierenden Zentrierelemente (54) der Heckscheibe (16) zusammenwirkt.

8. Kraftfahrzeug nach Anspruch 1,
**dadurch gekennzeichnet,**
**dass** die Heckscheibe (16) oberhalb der Schwenkachse (SH) breiter ausgebildet ist als unterhalb derselben.

9. Kraftfahrzeug nach Anspruch 1,
**dadurch gekennzeichnet,**
**dass** die Dachsäulen (18) eine im Bereich der Schwenkachse (SH) der Heckscheibe (16) versteifte Tragstruktur aufweisen.
